# EUROPÄISCHE PATENTSCHRIFT

(11) **EP 2 562 127 B1**
(45) Veröffentlichungstag und Bekanntmachung des Hinweises auf die Patenterteilung: **14.05.2014**
(21) Anmeldenummer: 12178420.1
(22) Anmeldetag: 30.07.2012
(51) Int. Cl.: G01B 11/06, B66F 9/075, G01B 11/00

(54) **Verfahren zur Hubhöhenmessung bei einem Flurförderzeug**
Procédé destiné à la mesure de la hauteur de levage dans un chariot de manutention
Lift height measurement method in an industrial truck

(30) Priorität: 23.08.2011 DE 102011110829; 28.10.2011 DE 102011054901
(43) Veröffentlichungstag der Anmeldung: 27.02.2013
(73) Patentinhaber: STILL GmbH, 22113 Hamburg (DE)
(72) Erfinder: Viereck, Volker, 23898 Kühsen (DE); Krüger-Basjmeleh, Tino, 25469 Halstenbek (DE)
(74) Vertreter: Geirhos, Johann

(56) Entgegenhaltungen:
- WO-A1-2012/048420
- GB-A- 2 459 349
- US-A- 6 017 125

## Beschreibung

Die Erfindung betrifft ein Verfahren zur Hubhöhenmessung bei einem Flurförderzeug. Insbesondere betrifft die Erfindung ein Verfahren zur Hubhöhenmessung bei einem Flurförderzeug mit einem Hubgerüst und einem an dem Hubgerüst höhenbeweglich angeordneten Lastaufnahmemittel, wobei das Hubgerüst ein Hubhöhenmesssystem mit einem Lichtemitter sowie einem Empfangselement umfasst.

Bei Flurförderzeugen mit einem Hubmast bzw. Hubgerüst, an dem eine Lastaufnahmevorrichtung, im häufigsten Fall eine Lastgabel, höhenbeweglich zum Transport der Last geführt ist, sind verschiedene Hubhöhenmesssysteme bekannt, mit denen erfasst werden kann, um welchen Wert die Lastaufnahmevorrichtung des Flurförderzeugs angehoben wurden. So werden z.B. Seilsensoren verwendet, mit denen die durch Anheben der Lastaufnahmevorrichtung von einer Seilrolle abgerollte Länge eines Seiles oder die Drehungen einer von einem Seil umschlungenen Messrolle erfasst werden.

Problematisch an diesen Lösungen ist, dass die verwendeten Seile oft reißen, da sie mechanischem Verschleiß und durch die Wechselbeanspruchung einer Materialermüdung unterliegen, oder an Gegenständen, wie zum Beispiel Regalen, Lasten, etc., hängen bleiben können.

Bekannt ist nach dem Stand der Technik die Verwendung optischer Sensoren in Form von Laserdistanzsensoren, die eine Höhenmessung absolut durchführen und sich durch geringe Baugröße gut in dem Bereich eines Hubgerüstes in ein Flurförderzeug integrieren lassen. Soweit diese Laserdistanzsensoren einen Laserstrahl auf einen Reflektor richten und ein Empfangssensor so angeordnet ist, dass er sich relativ zu dem Laserdistanzsensor nicht bewegt, sondern lediglich der Reflektor, ist zusätzlich keine Durchführung von Leitungen durch das Hubgerüst erforderlich.

Bei der Verwendung eines Laserdistanzsensors für eine Hubhöhenmessung, beispielsweise mit einem Lasersensor unten, der einen Laserstrahl nach oben auf ein geeignetes reflektierendes Ziel richtet, kann es jedoch durch Verschmutzungen der Optik des Lasers bzw. eines Empfangssensors oder des reflektierenden Ziels zu einem Ausfall der Hubhöhenmessung kommen. Auch kann der Laserstrahl durch ein Hindernis blockiert werden. Da Hubhöhenmessungen beispielsweise für die Automatisierung des Anfahrens eines bestimmten Regals in einer bestimmten Höhe eingesetzt werden, ist es wünschenswert, einen Ausfall der Hubhöhenmessung oder eine Messung falscher Werte möglichst zuverlässig zu erkennen. Insbesondere bei Hubgerüsten mit sehr großen Hubhöhen kann auch die Position des reflektierenden Ziels, z.B. durch Aufnahme einer Last oder während Beschleunigungs- / Abbremsvorgängen des Flurförderzeugs bei Fahrbewegungen, sich stark ändern, da damit eine Verbiegung des Hubgerüsts z. B. aus seiner senkrechten Achse heraus verbunden ist und das Ziel aus dem Strahlweg des Laserdistanzsensors in Richtung der Fahrzeuglängsachse oder quer zu der Fahrzeuglängsachse in Bezug auf die senkrechte Achse seitlich heraus wandert.

Aus der EP 1 886 966 A2 ist eine Vorrichtung zur berührungslosen Erfassung der Hubhöhe bekannt, bei der eine Sendevorrichtung ein wellenförmiges Signal, insbesondere eine elektromagnetische Welle, zu einer getrennt angeordneten Empfangsvorrichtung aussendet, wobei Sende- und Empfangsvorrichtung an in Relation zueinander bei Hubbewegungen des Hubgerüstes sich bewegenden Bauteilen angeordnet sind.

Aus der DE 10 2008 020 170 A1 ist ein Verfahren zur Erfassung der Höhenposition eines höhenbeweglichen Lastaufnahmemittels eines Flurförderzeugs bekannt. Bei diesem wird ein Bild eines relativ zu einer Empfangseinrichtung beweglichen Zielobjekts von der Empfangseinrichtung erfasst und aus der Veränderung des Bildes wird die Position des Lastaufnahmemittels bestimmt.

Der vorliegenden Erfindung liegt die Aufgabe zugrunde, ein Verfahren zur Hubhöhenmessung bei einem Flurförderzeug zur Verfügung zu stellen, dass die Zuverlässigkeit der Erfassung der Hubhöhe gegenüber dem geschilderten Stand der Technik verbessert.

Diese Aufgabe wird durch ein Verfahren zu Hubhöhenmessung bei einem Flurförderzeug mit den Merkmalen des Patentanspruchs 1 gelöst. Vorteilhafte Weiterbildungen sind in den Unteransprüchen angegeben.

Bei einem Verfahren zur Hubhöhenmessung bei einem Flurförderzeug mit einem Hubgerüst und einem an dem Hubgerüst höhenbeweglich angeordneten Lastaufnahmemittel, wobei das Hubgerüst ein Hubhöhenmesssystem mit einem Lichtemitter sowie einem Empfangselement umfasst, wird zur Überprüfung der Funktion der Hubhöhenmessung die zeitliche Änderung der Intensität des in dem Empfangselement empfangenen Signals des Lichtemitters erfasst.

Dadurch kann eine Überprüfung des Signals erfolgen und eine Unterbrechung der Sichtverbindung zwischen Lichtemitter und Empfangselement, z.B. durch Umwelteinflüsse wie Schmutz, Staub, Eisbildung etc. oder auch eine Verdeckung durch hereinragende Hindernisse usw., erkannt und berücksichtigt werden. Dabei wird der Effekt ausgenutzt, dass zum einen ein mit der Entfernung sich aufweitender Lichtstrahl zu einer geringeren Intensität bei gleicher optischen Öffnungsfläche des Empfangselements führt, und zum anderen der Lichtstrahl auf seinem Weg auch durch Streuung in der Luft sowie Verunreinigungen, wie Feuchtigkeit, Rauch und Staubteilchen mit zunehmender Entfernung in seiner Intensität abgeschwächt wird. Wenn eine Hubhöhenänderung erfolgt, so ist aus den mechanischen Gegebenheiten bzw. dem Steuersignal für das Heben oder Senken bekannt, wie schnell die Höhe sich ändern sollte oder maximal kann und es kann aus dieser Geschwindigkeit einer Hubhöhenänderung sowohl für das Anheben entsprechend einer Intensitätsabschwächung, als auch für das Absenken entsprechend einer Intensitätszunahme, jeweils eine Grenzkurve der maximalen Intensitätsänderung bei gleichmäßiger Heben- oder Senkenbewegung bestimmt werden. Bewegt sich die tatsächlich erfasste Intensitätsänderung außerhalb dieses Bereichs so liegt eine Fehlfunktion vor, etwa indem ein Hindernis in dem optischen Weg des Lichts liegt oder auch die Luft soweit verunreinigt ist, dass eine sichere Funktion nicht mehr gewährleistet ist. Letzteres kann zum Beispiel in stark mit Staub und Rauch belasteten Umgebungen, wie etwa Gießereien, auftreten. Ebenso kann dies auftreten, wenn bei großen Hubhöhen beispielsweise ein von unten nach oben strahlender Lasersensor ein Reflexionsziel wegen Verbiegung des Hubgerüstes nicht mehr "trifft". Das erfindungsgemäße Verfahren ist besonders kostengünstig umzusetzen, da die zur Verfügung stehenden Empfangselemente sehr häufig bereits eine Information über die Signalintensität liefern. Weiterhin weisen die Empfangselemente selbst oftmals bereits die erforderliche Rechenkapazität zur Durchführung des erfindungsgemäßen Verfahrens auf, oder kann die Durchführung des erfindungsgemäßen Verfahrens leicht in eine Fahrzeugsteuerung oder einen sonstigen Steuerungsrechner des Flurförderzeugs integriert werden. Dies führt dazu, dass das Verfahren in vielen Fällen rein mittels Software umsetzbar ist. Das Messprinzip der Hubhöhenmessung beruht dabei darauf, dass sich die optische Weglänge zwischen dem Lichtemitter und dem Empfangselement proportional zu der Hubhöhe ändert, beispielsweise, indem diese an bei einer Hubbewegung sich relativ zueinander bewegenden Teilen des Hubgerüstes und/oder des Lastaufnahmemittels angeordnet sind, oder der Lichtemitter auf ein Ziel gerichtet ist, von dem das Empfangselement zurückgeworfenes Licht empfängt und das Ziel sich relativ zu Lichtemitter und Empfangselement bei einer Hubbewegung bewegt.

In einer erfindungsgemäßen Weiterbildung des Verfahrens wird bei unstetigen Änderungen der Intensität eine Blockierung des Strahlweges und ein Funktionsausfall des Hubhöhenmesssystems angenommen.

Wenn sehr schnell eine Änderung der Intensität erfolgt oder eine solche Intensitätsänderung ohne Zwischenwerte, also mit einem Sprung bzw. unstetig, vor sich geht, kann von einer Blockierung des Lichtstrahls ausgegangen werden, beispielsweise aufgrund eines Hindernisses oder einer Verschmutzung.

Vorteilhaft wird eine kontinuierliche zeitliche Änderung der Intensität des in dem Empfangselement empfangenen Signals als Maß für eine zunehmende Verschmutzung der Optik des Empfangselements und/oder des Lichtemitters bewertet und bei einem Unterschreiten eines Schwellenwertes eine Verunreinigung des Hubhöhenmesssystems erkannt.

Der Lichtemitter, das Empfangselement, aber auch eventuelle den Lichtstrahl umlenkende Reflexionselemente sind gerade in den Arbeitsumgebungen von Flurförderzeugen einer kontinuierlichen allmählichen Verschmutzung der optisch relevanten Oberflächen ausgesetzt. Diese äußert sich in einer kontinuierlichen Abnahme der Signalintensität bei sonst gleichen Randbedingungen, wie insbesondere einer festen Hubhöhe, über einen längeren Zeitraum von Tagen oder Wochen. Durch ein Erfassen dieser Veränderung kann eine typische zunehmende Verschmutzung erkannt werden und es kann durch einen Schwellenwert festgelegt werden, ab wann zur Sicherstellung der Funktion des Höhenmesssystems eine Reinigung erforderlich ist.

Es kann ein Signal für einen Fahrer angezeigt werden oder durch ein Steuersignal eine Reinigungsvorrichtung aktiviert werden.

Vorteilhaft kann bei einer bestehenden Reinigungsvorrichtung eine solche Reinigung des Hubhöhenmesssystems, bzw. der Optiken zum Beispiel des Empfangselements oder des Lichtemitter, durch ein Steuersignal automatisch gestartet werden. Dadurch wird beispielsweise der eventuelle Verbrauch einer Waschflüssigkeit minimiert und die Betriebsbereitschaft über einen längeren Zeitraum verbessert. Alternativ kann auch einem Fahrer ein entsprechender Hinweis, beispielsweise in einem Armaturenbrett, angezeigt werden.

In einer günstigen Ausgestaltung des Verfahrens weitet der Strahl des Lichtemitters mit zunehmender Distanz auf und erfolgt zur Überprüfung der Werte der Hubhöhe eine Plausibilitätsprüfung, indem hubhöhenabhängig vorgegebene Wertebereiche der Intensität des reflektierten und in dem Empfangselement empfangenen Signals mit der erfassten Hubhöhe verglichen werden.

Soweit eine Strahlaufweitung beabsichtigt eingesetzt wird, kann dadurch die Überprüfung der Hubhöhe durch das erfindungsgemäße Verfahren nochmals verbessert werden. Die Änderung der Intensität pro Weg des Hubs ist dann erheblich größer, dass eine relative genaue Überprüfung der gemessenen Hubhöhe durch die erfasste Intensität möglich ist. Dies gilt insbesondere, wenn eine konstante Fläche eines Reflektor oder einer optischen Öffnung des Empfangselements sich stets in den sich aufweitenden Strahl befindet. Dabei wird durch die Intensitätsänderung vor allem eine relative Änderung der Hubhöhe erfasst, da Absolutwerte der Intensität auch von einer fortschreitenden Verschmutzungen der Optik, wie zuvor geschildert, und beispielsweise von den Umweltbedingungen wie Staub oder Rauch in der Luft abhängen.

In einer günstigen Ausgestaltung des Verfahrens wird die zeitliche Änderung der Intensität erfasst, korrigiert um die hubhöhenabhängige Intensitätsänderung.

Vor allem, wenn ein Lichtstrahl eine merkliche Aufweitung aufweist, ist es vorteilhaft, für eine Erfassung einer über einen längeren Zeitraum allmählich auftretenden Verschmutzung stets Werte gleicher Hubhöhe heranzuziehen und somit die Änderung der Intensität über die Hubhöhe zu korrigieren.

Zwischen Lichtemitter und Empfangselement kann ein Reflexionselement angeordnet sein und der Strahl kann mindestens einmal umgelenkt werden.

Dies ermöglicht einen Aufbau des Hubhöhenmesssystems, bei dem keine Anschlussleitungen in dem Hubgerüst verlegt werden müssen, sondern beispielsweise das Empfangselement und ein Lichtemitter, insbesondere ein Laser, im unteren Bereich des Hubgerüstes angeordnet sind und ein Lichtstrahl auf ein Reflexionselement im oberen Teil des Hubgerüstes gerichtet ist.

Vorteilhaft ist der Lichtemitter ein Laser oder eine LED.

In einer Variante des erfindungsgemäßen Verfahrens ist das Empfangselement eine Kamera und der Lichtemitter eine Beleuchtungsvorrichtung für ein von der Kamera erfasstes Zielobjekt.

Auch bei Systemen, bei denen eine Entfernungsmessung mithilfe von Bildverarbeitung geschieht, indem zum Beispiel die Größenänderung eines aufgenommenen Objekts mit der Entfernung erfasst wird, kann vorteilhaft zusätzlich eine Überprüfung über die Intensitätsänderung erfolgen.

Weitere Vorteile und Einzelheiten der Erfindung werden anhand des in den schematischen Figuren dargestellten Ausführungsbeispiels näher erläutert. Hierbei zeigt
- Fig. 1: einen Gegengewichtsgabelstapler, bei dem das erfindungsgemäße Verfahren zur Anwendung kommt, in einer Seitenansicht,
- Fig. 2: schematisch das Hubgerüst des Gabelstaplers der Fig. 1 und
- Fig. 3: in einem Diagramm die Intensität über der Hubhöhe, wie sie bei dem erfindungsgemäßen Verfahren erfasst wird.

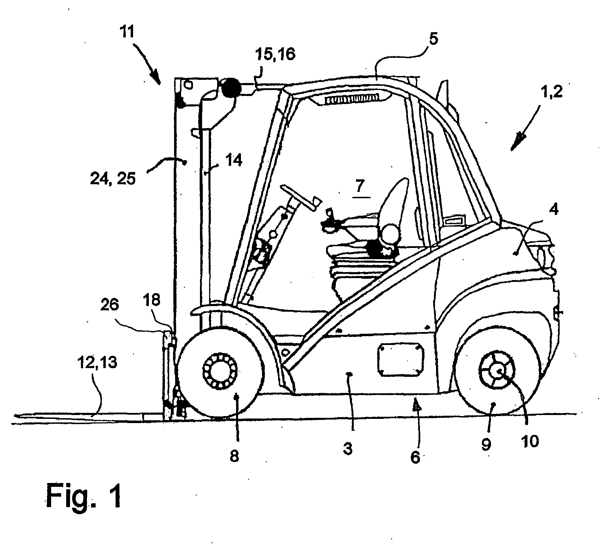

Die Fig. 1 zeigt ein Flurförderzeug 2, beispielsweise ein Gegengewichtsgabelstapler 1, in einer Seitenansicht, bei dem das erfindungsgemäße Verfahren zur Anwendung kommt. Der Gegengewichtsgabelstapler 1 umfasst in einem mittleren Abschnitt eines von einem Rahmen 3, einem Gegengewicht 4 und einem Fahrerschutzdach 5 gebildeten Fahrzeugaufbaus 6 und innerhalb des Fahrerschutzdaches 5 einen Fahrerarbeitsplatz 7.

Unterhalb des Fahrerarbeitsplatzes 7 ist ein Aggregateraum ausgebildet, in dem sich die Komponenten des Antriebssystems des Gabelstaplers 1 befinden. Bei einem verbrennungs-motorischen Antriebssystem können unterhalb des Fahrerarbeitsplatzes 7 ein Verbrennungsmotor und die von dem Verbrennungsmotor angetriebenen Komponenten eines Fahrantriebs und einer Arbeitshydraulk angeordnet sein. Bei einem batterie-elektrischen Antriebssystem ist unterhalb des Fahrerarbeitsplatzes 7 ein Batteriefach zur Aufnahme einer beispielsweise als Batterieblock ausgebildeten Energieversorgungseinrichtung ausgebildet, mit der der Fahrantrieb und die Arbeitshydraulik mit elektrischer Energie versorgt werden.

In der Fig. 1 sind weiterhin im vorderen Bereich des Gegengewichtsgabelstaplers 1 Räder dargestellt, die als Antriebsräder 8 ausgebildet sind, und im heckseitigen Bereich eine mit gelenkten Rädern 9 versehene Lenkachse 10.

An der Vorderseite des Gabelstaplers 1 ist ein Hubgerüst 11 angeordnet, an dem ein als Lastgabel 12 ausgebildetes Lastaufnahmemittel 13 anhebbar und absenkbar geführt ist.

Das Hubgerüst 11 umfasst einen Standmast 14, der von zwei seitlich, in Fahrzeugquerrichtung beabstandet angeordneten vertikalen Hubgerüstprofilen gebildet ist. Der Standmast 14 ist mittels eines Neigeantriebs 15, der von Neigezylindern 16 gebildet ist, in der Neigung verstellbar am Fahrzeugaufbau 6 angeordnet.

Das Hubgerüst 11 ist als Mehrfach-Hubgerüst ausgebildet, das ein oder mehrere in dem Standmast 14 geführte und nach oben ausfahrbare Ausfahrmaste 24, 25 aufweist, in denen das Lastaufnahmemittel 13 an einem Hubschlitten 26 höhenverstellbar geführt ist. Das Hubgerüst 11 ist in Fahrzeugquerrichtung zwischen den Antriebsrädern 8 angeordnet.

An der Lastgabel 12 bzw. dem Hubschlitten 26 ist ein Reflexionsziel 18 angeordnet, das von einem an dem Standmast oder dem Flurförderzeug 2 angeordneten und in der Darstellung der Fig. 1 nicht erkennbaren Lasersensor angestrahlt wird. Das reflektierte Laserlicht wird von einem mit dem Lasersensor verbundenen Empfangselement erfasst. Das Empfangselement kann dabei die Intensität des aufgenommenen Signals erfassen und diese Informationen kann in einem Steuerungsrechner des Flurförderzeugs 2 verarbeitet werden.

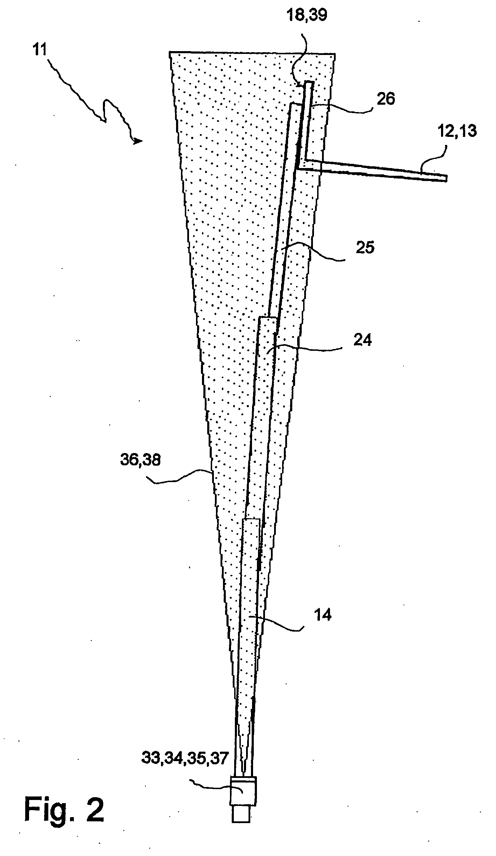

Die Fig. 2 zeigt schematisch das Hubgerüst 11 des Flurförderzeugs 2 der Fig. 1. Das Hubgerüst 11 weist den Standmast 14 auf, an dem der erste Ausfahrmast 24 und der zweite Ausfahrmast 25 nach oben ausschiebbar geführt sind, sowie der Hubschlitten 26 mit der Lastgabel 12 als Lastaufnahmemittel 13. An dem Standmast 14 ist eine Sensoreinheit 33 bestehend aus einem Laser 37 als Lichtemitter 34 und ein Empfangselement 35 angeordnet. Der Laser 37 weist eine aufweitende Optik bestehend aus einer Streulinse auf, die den Laserstrahl zu einem Laserstrahlkegel 38 als aufgeweiteten Lichtstrahl 36 aufweitet. Der Laserstrahlkegel 38 ist senkrecht nach oben auf ein Reflexionsziel 18 gerichtet, das an dem Hubschlitten 26 angebracht ist und eine Retroreflexionfläche 39 ist, die Lichtstrahlen in einem bestimmten Winkelbereich unabhängig vom Einfallwinkel auf sich selbst reflektiert. Dabei ist der Öffnungswinkel des Laserstrahlkegels 38 so gewählt, dass das Reflexionsziel 18 bei im normalen Betrieb möglicher maximaler Auslenkung des Hubgerüstes 11, beispielsweise durch Fahrbewegungen bzw. eine aufliegende Last, sich noch innerhalb des Laserstrahlkegels 38 befindet, während der Hub des Hubgerüstes 11 maximal ist.

Wenn bei einer Hubbewegung das Reflexionsziel 18 innerhalb des aufgeweiteten Lichtstrahl 36 nach oben bewegt wird, so wird durch das Reflexionsziel 18 ein immer kleinerer prozentualer Anteil des Lichtstrahls 36 zu dem Empfangselement 35 reflektiert. In dem Empfangselement 35 wird die Intensität des aufgenommenen Signals ebenfalls erfasst und den Steuerungsrechner des Flurförderzeugs 2 zur Verfügung gestellt.

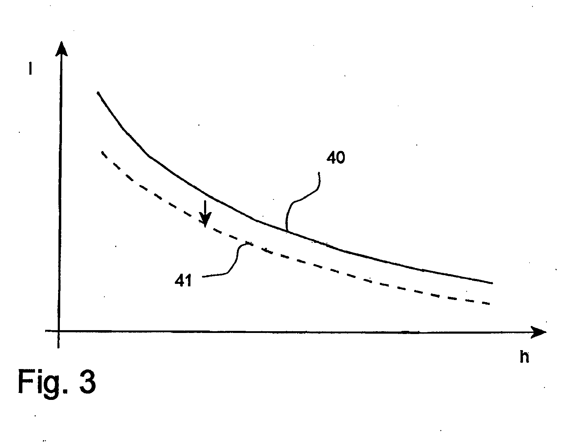

Die Fig. 3 zeigt in einem Diagramm die Intensität I über der Hubhöhe h, wie sie bei dem erfindungsgemäßen Verfahren erfasst wird. In dem Steuerungsrechner kann nun anhand einer Intensitätskurve 40, die beispielsweise für einen bestimmten Typ von Flurförderzeug bzw. Höhenmesssystem berechnet oder ausgemessen werden kann, jedem Intensitätswert I eine Hubhöhe h zugeordnet werden, und mit der durch das Hubhöhenmesssystem gemessenen Hubhöhe verglichen werden. Dabei kann noch ein gewisser Toleranzbereich berücksichtigt werden, durch den Effekte wie Verschmutzungen der Luft ausgeglichen werden. Durch die allmählich zunehmende Verschmutzung der optisch relevanten Flächen verschiebt sich diese Intensitätskurve 40, wie durch den Pfeil verdeutlicht, allmählich nach unten bis zu einer Grenzkurve 41. Wird diese Grenzkurve 41 erreicht, so ist eine Reinigung erforderlich. Dabei wird bei dem erfindungsgemäßen Verfahren auch noch überprüft, wie schnell die Intensitätskurve 40 durchlaufen wird. Kommt es zu plötzlichen Sprüngen von einem Punkt der Intensitätskurve 40 zu einem anderen Punkt der Intensitätskurve 40, etwa indem die Intensität auf ein Drittel oder gar Null abfällt, entsprechend einer viel größeren Hubhöhe h, so liegt eine Fehlfunktion vor, da wahrscheinlich ein Hindernis sich in dem Lichtstrahl 36 befindet. Ob die Änderung innerhalb erlaubter Bewegungsgeschwindigkeiten ist, kann überprüft werden anhand der technisch maximal möglichen Hubgeschwindigkeit bzw. anhand der gemessenen Hubgeschwindigkeit, oder der durch ein Steuersignal der Bedienelemente vorgegebenen Hubgeschwindigkeit. Auch die Verschiebung der Intensitätskurve 40 insgesamt nach unten kann anhand von vorgegebenen maximalen Verschiebungen der Intensitätskurve 40 für eine allmähliche Verschmutzung überprüft werden.

## Patentansprüche

1. Verfahren zur Hubhöhenmessung bei einem Flurförderzeug (2) mit einem Hubgerüst (11) und einem an dem Hubgerüst (11) höhenbeweglich angeordneten Lastaufnahmemittel (13), wobei das Hubgerüst (11) ein Hubhöhenmesssystem mit einem Lichtemitter (34) sowie einem Empfangselement (35) umfasst,
**dadurch gekennzeichnet,**
**dass** zur Überprüfung der Funktion der Hubhöhenmessung die zeitliche Änderung der Intensität (I) des in dem Empfangselement (35) empfangenen Signals des Lichtemitters (34) erfasst wird.

2. Verfahren nach Anspruch 1,
**dadurch gekennzeichnet,**
**dass** bei unstetigen Änderungen der Intensität (I) eine Blockierung des Strahlweges und ein Funktionsausfall des Hubhöhenmesssystems angenommen wird.

3. Verfahren nach Anspruch 1 oder 2,
**dadurch gekennzeichnet,**
**dass** eine kontinuierliche zeitliche Änderung der Intensität (I) des in dem Empfangselement (35) empfangenen Signals als Maß für eine zunehmende Verschmutzung der Optik des Empfangselements (35) und/oder Lichtemitters (34) bewertet wird und bei einem Unterschreiten eines Schwellenwertes eine Verunreinigung des Hubhöhenmesssystems erkannt wird.

4. Verfahren nach Anspruch 3,
**dadurch gekennzeichnet,**
**dass** ein Signal für einen Fahrer angezeigt wird oder durch ein Steuersignal eine Reinigungsvorrichtung aktiviert wird.

5. Verfahren nach einem der Ansprüche 1 bis 4,
**dadurch gekennzeichnet,**
**dass** der Strahl des Lichtemitters (34) mit zunehmender Distanz aufweitet und zur Überprüfung der Werte der Hubhöhe (h) eine Plausibilitätsprüfung erfolgt, indem hubhöhenabhängig vorgegebene Wertebereiche der Intensität des reflektierten und in dem Empfangselement empfangenen Signals mit der erfassten Hubhöhe verglichen werden.

6. Verfahren nach Anspruch 5 und einem der Ansprüche 3 oder 4,
**dadurch gekennzeichnet,**
**dass** die zeitliche Änderung der Intensität (I) korrigiert um die hubhöhenabhängige Intensitätsänderung erfasst wird.

7. Verfahren nach einem der Ansprüche 1 bis 6,
**dadurch gekennzeichnet,**
**dass** zwischen Lichtemitter (34) und Empfangselement (35) ein Reflexionselement (18) angeordnet ist und der Strahl mindestens einmal umgelenkt wird.

8. Verfahren nach einem der Ansprüche 1 bis 7,
**dadurch gekennzeichnet,**
**dass** der Lichtemitter (34) ein Laser (37) ist.

9. Verfahren nach einem der Ansprüche 1 bis 8,
**dadurch gekennzeichnet,**
**dass** der Lichtemitter (34) eine LED ist.

10. Verfahren nach einem der Ansprüche 1 bis 7,
**dadurch gekennzeichnet,**
**dass** das Empfangselement eine Kamera und der Lichtemitter eine Beleuchtungsvorrichtung für ein von der Kamera erfasstes Zielobjekt ist.

## Claims

1. Method for lifting height measurement in an industrial truck (2) with a lifting frame (11) and a load-bearing means (13) arranged on the lifting frame (11) in a vertically movable fashion, the lifting frame (11) having a lifting height measurement system having a light emitter (34) and a receiving element (35), **characterized in that**, for checking the function of the lifting height measurement, the temporal change in the intensity (I) of the signal from the light emitter (34) received in the receiving element (35) is captured.

2. Method according to Claim 1, **characterized in that**, in the event of uneven changes in the intensity (I), a blocking of the beam path and a functional failure of the lifting height measurement system is assumed.

3. Method according to Claim 1 or 2, **characterized in that** a continuous temporal change in the intensity (I) of the signal received in the receiving element (35) is evaluated as a measure of an increasing amount of dirt on the optics of the receiving element (35) and/or of the light emitter (34) and, in the event a threshold value is not reached, contamination of the lifting height measurement system is detected.

4. Method according to Claim 3, **characterized in that** a signal is indicated to a driver or a cleaning apparatus is activated by a control signal.

5. Method according to one of Claims 1 to 4, **characterized in that** the beam of the light emitter (34) expands as the distance increases and, for checking the values of the lifting height (h), a plausibility check is carried out by comparing value regions of the intensity of the reflected signal received in the receiving element, which value regions are prespecified depending on the lifting height, to the captured lifting height.

6. Method according to Claim 5 and either of Claims 3 and 4, **characterized in that** the temporal change in the intensity (I) is corrected and the lifting-height-dependent intensity change is captured.

7. Method according to one of Claims 1 to 6, **characterized in that** a reflection element (18) is arranged between the light emitter (34) and the receiving element (35) and the beam is deflected at least once.

8. Method according to one of Claims 1 to 7, **characterized in that** the light emitter (34) is a laser (37).

9. Method according to one of Claims 1 to 8, **characterized in that** the light emitter (34) is an LED.

10. Method according to one of Claims 1 to 7, **characterized in that** the receiving element is a camera and the light emitter is an illumination apparatus for a target object captured by the camera.

## Revendications

1. Procédé destiné à la mesure de la hauteur de levage dans un chariot de manutention (2) doté d'un châssis de levage (11) et d'un moyen de réception de charge (13) disposé de façon mobile en hauteur au niveau du châssis de levage (11), le châssis de levage (11) comprenant un système de mesure de hauteur de levage avec un émetteur de lumière (34) ainsi qu'un élément de réception (35), **caractérisé en ce que** pour contrôler la fonction de la mesure de la hauteur de levage, on détecte la variation dans le temps de l'intensité (I) du signal reçu, dans l'élément de réception (35), de l'émetteur de lumière (34).

2. Procédé selon la revendication 1, **caractérisé en ce qu'**en cas de variations non constantes de l'intensité (I), on suppose la présence d'un blocage de la trajectoire de la lumière et d'une panne fonctionnelle du système de mesure de hauteur de levage.

3. Procédé selon la revendication 1 ou 2, **caractérisé en ce qu'**une variation continue dans le temps de l'intensité (I) du signal reçu dans l'élément de réception (35) sert de mesure d'analyse de la salissure croissante du système optique de l'élément de réception (35) et/ou de l'émetteur de lumière (34) et qu'en cas de passage en dessous d'une valeur seuil, un encrassement du système de mesure de hauteur de levage est détecté.

4. Procédé selon la revendication 3, **caractérisé en ce qu'**un signal est affiché à un conducteur ou qu'un dispositif de nettoyage est activé par un signal de commande .

5. Procédé selon l'une quelconque des revendications 1 à 4, **caractérisé en ce que** le faisceau de l'émetteur de lumière (34) s'élargit à mesure que la distance augmente et que pour contrôler les valeurs de la hauteur de levage (h), on effectue un contrôle de plausibilité en comparant les plages de valeur, prédéfinies en fonction des hauteurs de levage, de l'intensité du signal réfléchi et reçu dans l'élément de réception à la hauteur de levage détectée.

6. Procédé selon la revendication 5 et l'une quelconque des revendications 3 ou 4, **caractérisé en ce que** la variation dans le temps de l'intensité (I) est détectée en étant corrigée de la variation d'intensité dépendant de la hauteur de levage.

7. Procédé selon l'une quelconque des revendications 1 à 6, **caractérisé en ce qu'**un élément réfléchissant (18) est disposé entre l'émetteur de lumière (34) et l'élément de réception (35) et que le faisceau est articulé au moins une fois.

8. Procédé selon l'une quelconque des revendications 1 à 7, **caractérisé en ce que** l'émetteur de lumière (34) est un laser (37).

9. Procédé selon l'une quelconque des revendications 1 à 8, **caractérisé en ce que** l'émetteur de lumière (34) est une DEL.

10. Procédé selon l'une quelconque des revendications 1 à 7, **caractérisé en ce que** l'élément de réception est une caméra et que l'émetteur de lumière est un dispositif d'éclairage prévu pour un objet cible détecté par la caméra.
